# EUROPÄISCHE PATENTSCHRIFT

(11) **EP 1 263 568 B1**
(45) Veröffentlichungstag und Bekanntmachung des Hinweises auf die Patenterteilung: **06.10.2004**
(21) Anmeldenummer: 01929352.1
(22) Anmeldetag: 21.02.2001
(51) Int. Cl.: B29C 65/48, B29C 65/52, B29C 65/00, B29C 65/78, G11B 7/26

(54) **VORRICHTUNG ZUM VAKUUMPRESSEN VON DVD-SUBSTRATEN**
DEVICE FOR VACUUM COMPRESSING DVD SUBSTRATES
DISPOSITIF POUR COMPRIMER SOUS VIDE DES SUBSTRATS DE DVD

(30) Priorität: 22.02.2000 DE 10008111
(43) Veröffentlichungstag der Anmeldung: 11.12.2002
(73) Patentinhaber: Krauss-Maffei Kunststofftechnik GmbH, 80997 München (DE)
(72) Erfinder: EICHLSEDER, Martin, 94167 Tettenweis (DE)
(74) Vertreter: Zollner, Richard, Dipl.-Phys.
(86) Internationale Anmeldenummer: PCT/EP2001/001979
(87) Internationale Veröffentlichungsnummer: WO 2001/062473

(56) Entgegenhaltungen:
- DE-A- 19 817 150
- DE-U- 29 904 325

## Beschreibung

Die Erfindung betrifft eine Vorrichtung zum Vakuumpressen von DVD-Substraten zu einer fertigen DVD, insbesondere unter Verwendung eines thermoplastischen Klebers vom Typ Holt-Melt, gemäß dem Oberbegriff der nebengeordneten Patentanprüche 1 und 16.

Aus dem Stand der Technik ist es bereits in verschiedenen Ausführungen bekannt, das Verbinden von scheibenförmigen Substraten, wie beispielsweise DVD-Substraten, unter Vakuum und unter Einwirkung von Druck auszuführen. Dies gilt sowohl für das bevorzugte Anwendungsgebiet, dem Verbinden mit einem Kleber vom Typ Holt-Melt, als auch beim Verkleben mittels UV-aushärtendem Lack. Bei der Verwendung von UV-aushärtendem Lack als Klebemittel ist jedoch im Gegensatz zum Hot-Melt-Typ ein geringerer Druck ausreichend. Ein weiterer Unterschied ergibt sich dadurch, daß bei UV-aushärtendem Lack die aufeinander gelegten Substrate noch schwimmend sind, solange keine UV-Bestrahlung erfolgt und der UV-Lack aushärtet, während bei Verwendung eines Hot-Melt-Klebers die Substrate bei Berührung der Klebflächen sofort fixiert sind und somit eine anschließende Ausrichtung, also eine geringfügige Verschiebung gegeneinander, nicht mehr möglich ist.

In der DE 197 15 779 A1 wird zum Verbinden von zwei DVD-Substraten, auf die ein UV-Lack als Kleber aufgetragen worden ist, vorgeschlagen, das eine Substrat in das Deckelteil und das andere Substrat in das Bodenteil einer Vakuumkammer einzulegen, dort zentriert zu fixieren und das Deckelteil auf das Bodenteil aufzusetzen, so dass die Kleberschichten einander gegenüberliegen. Nachdem die Vakuumkammer evakuiert worden ist und der Druck unter einen vorgegeben Druck abgefallen ist, wird eine im Deckelteil untergebrachte Zentrier-/Spannvorrichtung gelöst und das obere Substrat fällt auf das untere Substrat, wobei das Fallen durch mehrere im Deckelteil um das zentrale Loch des Substrats angeordnete und mit axialen Führungsstiften versehene Gewichte unterstützt wird. Anstelle der Gewichte können auch Federelemente oder dergleichen vorgesehen werden. Wenn die beiden Kleberschichten der Substrate dann naß in naß aufeinanderliegen, wird die Vakuumkammer belüftet und der Atmosphärendruck bewirkt, dass noch eventuell kontaktlose Zonen zwischen dem Klebemittel und den beiden Substraten aufeinander gepresst werden. Diese Anordnung ist für das Verkleben von mit Hot-Melt-Kleber belegten Substraten nicht geeignet, da mit den Gewichten und dem Atmosphärendruck nicht der nötige Anpressdruck zum sauberen Verbinden der Substrate aufgebracht werden kann. Außerdem erfolgt das gewichtsunterstützte Aufeinanderliegen nicht gleichmäßig über die gesamte Subtratfläche.

Aus der JP 1-204727 A ist es bekannt, bei der Herstellung optischer Datenträger zwei Substrate mit einem Kleber vom Hot-Melt-Typ zu beschichten und anschließend in einer Vakuumkammer miteinander zu verbinden, wobei bestimmte Obergrenzen für die Werte von Druck, Temperatur und Anpresskraft vorgegeben sind. Eine Wand der Vakuumkammer ist mit Durchführungen für Kolbenstangen ausgestattet, mit denen zwei Druckplatten aufeinander gepresst werden können, zwischen denen die Substrate angeordnet sind.

Ähnliche Vorrichtungen sind in den Dokumenten JP 08273210 A und EP 0 624 870 A2 beschrieben, wobei dies in der zuletztgenannten Druckschrift im Zusammenhang mit der Würdigung des Stands der Technik der Fall ist.

In der EP 0 735 530 A1 werden die DVD-Substrate in ihrem flächigen Bereich zunächst mit einem Kleber vom Hot-Melt-Typ (thermoplastischer Kleber) belegt. Anschließend wird bei einem Substrat in eine in der Nähe des zentralen Lochs vorgesehene Vertiefung ein UV-aushärtender flüssiger Kleber gefüllt. Anschließend wird das nur mit dem Hot-Melt-Kleber belegte Substrate von einem Handlingsystem um 180° gedreht, so dass sich die mit Kleber belegten Seiten der Substrate einander gegenüberliegen, und auf dem unteren Substrat abgelegt. In diesem zusammengefügten Zustand werden die beiden Substrate bzw. die DVD auf einer unteren Druckplatte abgelegt, die in der Mitte ein Quarzglasfenster zum Einstrahlen von UV-Licht aufweist, und die außerdem die Bodenplatte einer Vakuumkammer bildet. Von oben wird das Deckelteil der Vakuumkammer nach unten geführt, bis der Deckelrand die Bodenplatte berührt und so eine Kammer gebildet wird, die über einen Anschluss in der Bodenplatte evakuierbar ist. Durch den Deckel ist die Kolbenstange einer Kolben-Zylinder-Einheit durchgeführt. Am unteren Ende der Kolbenstange befindet sich eine weitere Druckplatte. Wenn in der Vakuumkammer ein vorgebener Druck unterschritten ist, wird die obere Kolbenstange druckbeaufschlagt nach unten bewegt und presst die aufeinandergeschichteten Substrate zwischen der oberen Druckplatte und der Bodenplatte zusammen. Gleichzeitig wird über das Quarzglasfenster UV-Licht in die Vakuumkammer eingestrahlt, um den UV-Kleber auszuhärten. Nach einer vorgebbaren Zeit wird die Vakuumkammer belüftet, der Kolben nach oben gefahren und die UV-Bestrahlung gestoppt. Nun ist das Verbinden der Substrate abgeschlossen und die fertige DVD kann entnommen werden.

Nachteilig an diesen bekannten Systemen zum Verbinden von DVD-Substraten ist, dass die Vakuumkammer einerseits und die Presseinrichtung andererseits getrennt voneinander ausgeführt sind und getrennt voneinander betrieben werden. Dies hat zur Folge, dass die Druckplatten, mit denen die Substrate gegeneinander verpresst werden, stets zwangsgeführt sind, so dass geringe Verkippungen in der Lage der Substrate nicht ohne weiteres ausgeglichen werden können. Bei derartigen geringfügigen Verkippungen in der Lage der Substrate wird somit an einer Stelle ein sehr hoher Anpressdruck und an einer anderen Stelle ein eher niedriger Anpressdruck ausgeübt. Letztendlich leidet hierunter auch die Parallelität der DVD.

In dem deutschen Gebrauchsmuster DE 299 04 325 U1 ist eine weitere Vorrichtung zum Verbinden von DVD-Substraten unter Anwendung von Vakuum beschrieben. In dieser Druckschrift wird eine zusammenklappbare Kammer vorgesehen und das eine Substrat in das Deckelteil und das andere Substrat in das Bodenteil der Vakuumkammer eingelegt. Der in dem Bodenteil befindliche Substrathalter ist beweglich gelagert. Weiterhin ist eine Hubplatte vorgesehen, von der mehrere. Führungswellen aufragen, das Bodenteil der Vakuumkammer durchdringen und mit dem unteren Substrathalter in Wirkverbindung stehen, um zusätzlich eine mechanische Verschiebung des unteren Substrathalters zur Erhöhung des Anpressdrucks zu ermöglichen. Durch Aufbau eines Unterdruckes zwischen den Substraten wird in einem ersten Schritt der untere, bewegliche Substrathalter nach oben bewegt und die Substrate mit einem ersten Wert des Anpressdrucks miteinander verklebt. In einem zweiten Schritt wird die Hubplatte nach oben gefahren und bewirkt über die Führungswellen eine mechanische Verschiebung des unteren Substrathalters, so daß der Anpressdruck auf einen zweiten Wert erhöht werden kann. Nachteilig ist zum einen, daß die Führungswellen vakuumdicht durch das Bodenteil der Vakuumkammer geführt werden müssen, was einen entsprechenden Aufwand an Dichtungsmassnahmen erfordert. Weiterhin nachteilig ist, daß mindestens die Hubplatte und die Führungswellen aufgrund der mechanischen Verbindung mit dem unteren Substrathalter von dem Fügevakuum mit nach oben bewegt werden müssen und daß dabei gleichzeitig die Antriebsmittel für die Hubplatte mechanisch von dieser Hubplatte entkoppelt sein müssen oder die Antriebsmittel müssen auch von dem Fügevakuum mit nach oben bewegt werden. Ausserdem ist auch bei diesem System mit den Führungswellen und der Hubplatte eine zwangsgeführte Bewegung der Substrate gegeneinander vorgesehen. Dies hat dieselben Nachteile, wie sie schon oben bei dem zuvor genannten Stand der Technik genannt worden sind.

Der Erfindung liegt daher die Aufgabe zugrunde, eine Vorrichtung zum Vakuumpressen von DVD-Substraten anzugeben, bei dem die zu verklebenden Substrate sich gegeneinander ausrichten können, die vergleichsweise einfach konstruiert ist, und bei der der Druck, mit dem die DVD-Substrate zusammengefügt und verpresst werden, in weiten Bereichen und kontinuierlich einstellbar ist.

Die Lösung dieser Aufgabe erfolgt bei einer Vorrichtung gemäß dem Oberbegriff von Patentanspruch 1 mit den Merkmalen des kennzeichnenden Teils. Erfindungsgemäß wird vorgeschlagen, dass ein in der Vakuumkammer verschiebbares und an seinem Umfang mit Dichtmitteln ausgestattetes Zwischenelement vorgesehen ist, das die Vakuumkammer in eine erste an eine Vakuumpumpe angeschlossene Kammer (Unterdruckkammer) und eine zweite an eine Druckluftquelle angeschlossene Kammer (Überdruckkammer) aufteilt, so dass ein Zweikammemsystem gebildet wird, wobei das Zwischenelement auf der Seite der Unterdruckkammer als erster Substrathalter ausgebildet ist, und wobei der zweite Substrathalter auf der dem ersten Substrathalter gegenüberliegenden Seite der Unterdruckkammer vorgesehen ist. Damit kann durch gezielte Einstellung von Unterdruck einerseits und Überdruck andererseits ein optimierter Verfahrensablauf beim Vakuumpressen eingestellt werden, indem unter Einwirkung des Vakuums das Zwischenelement angezogen und die Unterdruckkammer verkleinert wird, so dass auch die Substrate einander anziehen, und indem zum geeigneten Zeitpunkt durch zusätzlichen Druckaufbau in der Überdruckkammer das Zwischenelement und damit das eine Substrat gegen das andere Substrat genügend stark gepresst wird. Aufgrund des nur mit Dichtmitteln und somit in gewisser Hinsicht schwimmend gelagerten Zwischenelements kann dieses geringfügige Kippbewegungen ausführen, so dass sich der Substrathalter des Zwischenelements in gewissem Umfang an die Lage des anderen Substratshalters anpassen kann. Außerdem ist zu beachten, dass die spritzgegossenen Substrate selbst nicht überall und hundertprozentig gleich dick sind und dadurch Bereiche entstehen, die einem hohen Anpressdruck und solche, die einem niedrigeren Anpressdruck ausgesetzt sind. Vorteilhafte Weiterentwicklungen und Ausgestaltungen finden sich in den Unteransprüchen 2 bis 15.

In einer weiteren Ausgestaltung der Erfindung ist vorgesehen (Patentanspruch 16 und folgende), daß die untere Kammer wahl- und wechselweise an eine Druckluftquelle und an eine Vakuumpumpe angeschlossen werden kann. Es kann somit zu beiden Seiten des Zwischenelements ein Vakuum erzeugt werden. Wenn auf beiden Seiten ein gleichgrosses Vakuum eingestellt wird, herrscht ein Kräftegleichgewicht und das Zwischenelement verharrt zunächst in seiner Ursprungslage. Ist ein bestimmter Wert des Unterdrucks erreicht, wird in unteren Kammer das Vakuum bis auf den Umgebungsdruck reduziert, was bewirkt, daß das Zwischenelement nach oben fährt und die Substrate sich berühren. Anschließend wird umgeschaltet auf Überdruck um ein sicheres Verpressen ermöglichen. Durch die Geschwindigkeit, wie schnell das Vakuum in der unteren Kammer reduziert wird, kann die Fügegeschwindigkeit verfahrensoptimiert eingestellt werden. Je nach Fügegeschwindigkeit kann der Fügeprozess somit eher hart oder eher weich eingestellt werden, was bei spröden oder empfindlichen Schichten wie DVD 18, DVD-R und DVD-RW von Bedeutung ist.

Nachfolgend soll die Erfindung anhand von Ausführungsbeispielen und unter Bezugnahme auf die Figuren 1 bis 5 näher erläutert werden. Es zeigen:
- Fig.1(a) - Fig.1(m):: schematische Darstellung des Fügeablaufs beim Vakuumpressen;
- Fig.2:: vergrößerte Darstellung des Fügeschritts gemäß Fig.1(i);
- Fig.3:: erste Ausführungsform der Fügestation in geöffnetem Zustand;
- Fig.4:: Draufsicht auf die Fügestation in geöffnetem Zustand gemäß Fig.3;
- Fig.5:: zweite Ausführungsform der Fügestation in geöffnetem Zustand.

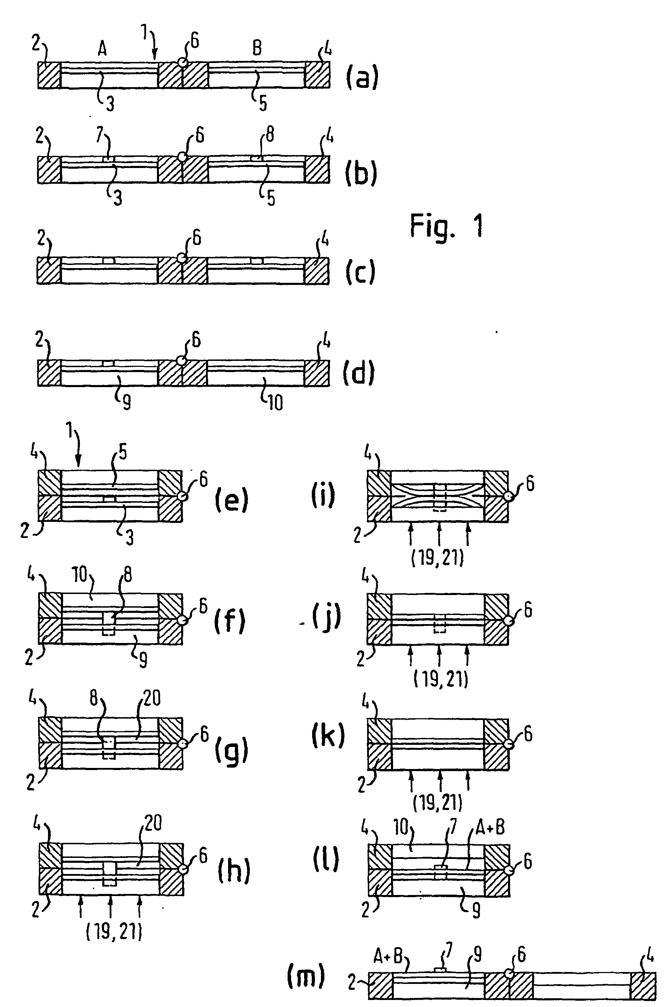

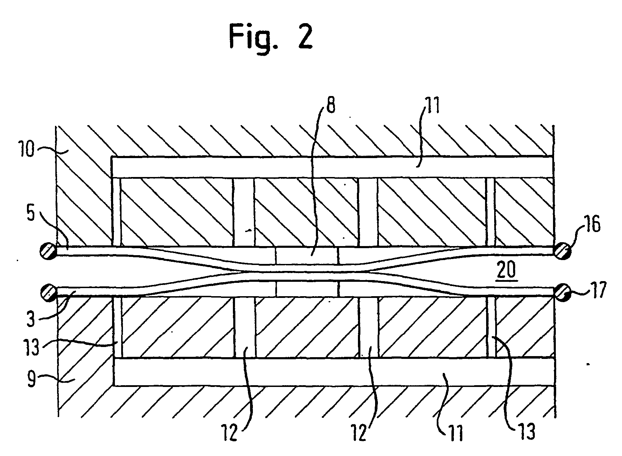

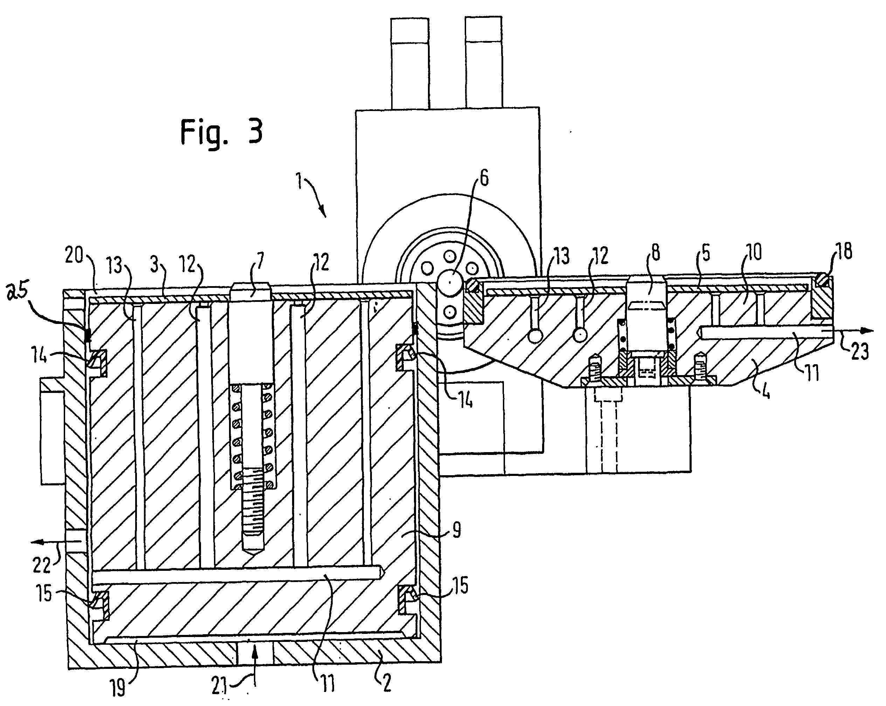

Gemäß Fig.1 ist eine Vakuumkammer 1 vorgesehen, die ein Bodenteil 2 zur Aufnahme des A-Substrats 3 und ein Deckelteil 4 zur Aufnahme des B-Substrats 5 umfasst. Zum Schließen der Vakuumkammer kann das Deckelteil 4 um eine senkrecht auf der Blattebene stehende Achse 6 geschwenkt werden. Zunächst werden die mit Kleber belegten DVD-Substrate 3 und 4 in das Boden- und das Deckelteil eingelegt (Fig.1a), so dass die mit Kleber belegte Fläche nach oben zeigt. Die Substrate liegen in dem Boden- und Deckelteil auf Vakuumtellem und sind aufgrund des Vakuums (Haltevakuums) in ihren Positionen fixiert. Im nächsten Schritt (Fig. 1 b) werden sowohl das Haltevakuum am A-Substrat 3 als auch das Haltevakuum am B-Substrat 5 ausgeschaltet, Zentrierpins 7 und 8 ausgefahren und durch das jeweilige Mittelloch der Substrate hindurchbewegt. Anschließend wird das Haltevakuum am B-Sustrat 5 wieder eingeschaltet (Fig.1c), der B-Zentrierpin 8 zurückgefahren (Fig.1d), das Deckelteil 4 um die Achse 6 geschwenkt und die Vakuumkammer 1 geschlossen (Fig.1e). Um ein Anziehen der Substrate aufgrund statischer Aufladung zu verhindern, wird beim Schließen der Vakuumkammer das Haltevakuum am A-Substrat 3 wieder eingeschaltet. Nachdem die Vakuumkammer geschlossen ist, wird der B-Zentrierpin 8 ausgefahren und zwar bis durch das Mittelloch des A-Substrats 3 hindurch, wobei gleichzeitig der A-Zentrierpin 7 zurückgedrückt wird (Fig.1f). Beide DVD-Substrate A und B sind nun gemeinsam auf dem B-Zentrierpin 8 zentriert. Nunmehr wird das Fügevakuum eingeschaltet, d.h. die Vakuumkammer 1 wird mittels einer Vakuumpumpe evakuiert und infolgedessen wird der Fügeteller A, d.h. der Substrathalter 9, durch das Vakuum hochgezogen (Fig.1g). Zur Unterstützung wird der Substrathalter 9 von unten mit Druckluft beaufschlagt (Fig.1h). Sobald der untere Substrathalter 9 mit dem A-Substrat 3 bis auf einen vorgebbaren Abstand an das B-Substrat 5 angenähert ist, wird das Haltevakuum an beiden Substraten A und B ausgeschaltet und über die Vakuumkanäle in den Substrathaltem wird Luft zu den Substraten A und B geleitet und beide Substrate A und B werden von den Substrathaltem abgeblasen (Fig.1i), was noch näher im Zusammenhang mit Fig.2 beschrieben werden wird. Da beide Substrate A und B kurz vor dem Berühren der Klebeflächen ohne Verbindung zu den Vakuumtellem sind, können sie sich über den gemeinsamen Zentrierpin nochmals exakt zentrieren. Beim Abblasen werden die Substrate mittig von innen nach außen durchgebogen (siehe auch Fig.2), so dass die Kleberflächen von innen nach außen verlaufend zur Berührung kommen, wobei durch das Fügevakuum zwischen den Substraten A und B die Luft zwischen den Substraten abgesaugt wird. Die Substrate A und B sind nun zusammengefügt; der als Kolben ausgebildete Substrathalter 9 (vgl. hierzu die Fig.3) steht auf Anschlag und es kann sich unter dem Kolben der gewünschte Pressdruck aufbauen (Fig.1j). Wenn der Pressdruck genügend lange eingewirkt hat, werden der B-Zentrierpin 8 zurückgefahren, das Haltevakuum A ein- und das Fügevakuum ausgeschaltet (Fig.1k). Sobald der Pressdruck abgeschaltet ist kann der Kolben zurückfahren, das Abblasen bei B wird eingeschaltet und der A-Zentrierpin ausgefahren (Fig.1l). Schließlich wird das Deckelteil 4 aufgeklappt und das Haltevakuum A ausgeschaltet. Die fertige DVD liegt zentriert auf dem Substrathalter 9 (dem Teller A) und kann entnommen werden.

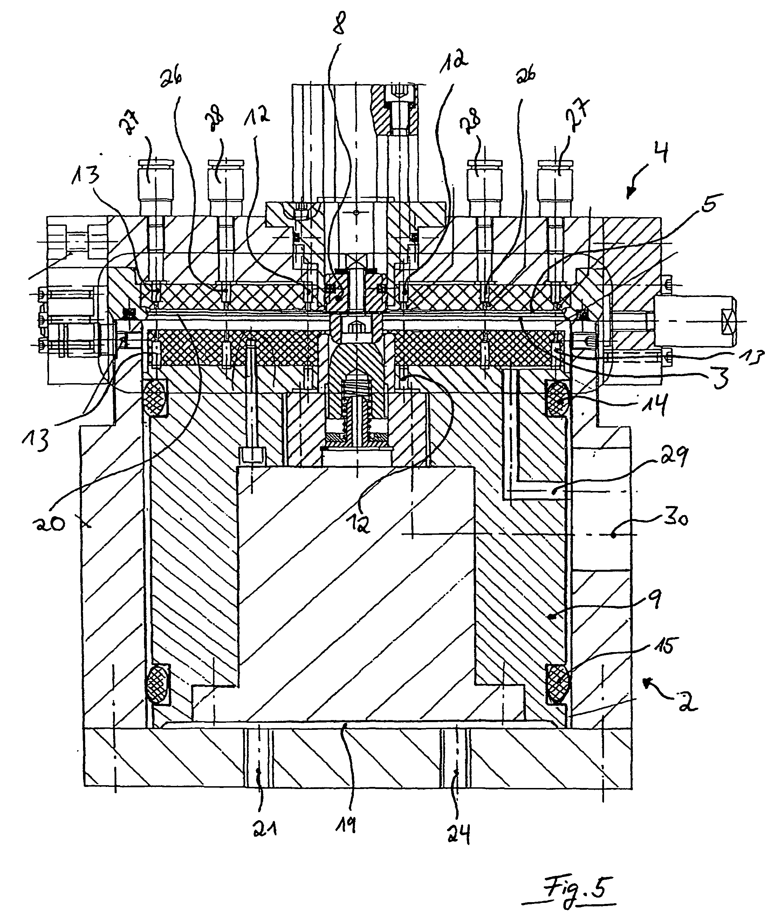

Fig.2 zeigt eine vergrößerte Darstellung des Verfahrensschritts 1i. In beiden Substrathaltem 9 und 10 befinden sich Vakuumkanäle 11 bis 13, wobei jeweils an eine Vakuumpumpe angeschlossene Hauptkanäle 11 horizontal in den Substrathaltem 9 und 10 verlaufen, von denen Kanäle 12 in der Nähe des Mittellochs und Kanäle 13 im Randbereich abzweigen und in der Oberfläche der Substrathalter enden, wobei die Kanäle 12 einen größeren Durchmesser aufweisen als die Kanäle 13. Mit diesem Kanalsystem wird das Haltevakuum in den Verfahrensschritten gemäß Fig.1 gebildet. Durch Umschalten von Vakuum auf Abblasen wird über dieses Kanalsystem auch die Luftzufuhr für den Verfahrensschritt gemäß Fig.1i eingeleitet, um die Substrate A und B mittig abzublasen. Die Zentrierung erfolgt hierbei über den durch beide Mittellöcher reichenden B-Zentrierpin 8, für den in dem unteren Substrathalter 9 eine ausreichend große Ausnehmung vorgesehen ist. Durch das Abblasen der Substrate A und B lösen sich diese von der Oberfläche der Substrathalter und können sich vor dem Berühren der Kleberflächen nochmals exakt zentrieren: Durch die größere Vakuumbohrung 12 innen werden die Substrate bevorzugt innen zuerst gelöst und abgeblasen. Durch das Lösen und Abblasen der Substrate von innen nach außen wird die Gefahr von Lufteinschlüssen zwischen den Substraten A und B stark reduziert. Alternativ können die inneren und äußeren Kanäle 12 bzw. 13 getrennt werden, wie dies in dem Beispiel gemäß Figur 5 der Fall ist, um durch ein separates Ventil das Vakuum außen verzögert abzuschalten und verzögert auf Abblasen umzuschalten. Beim getrennten Betreiben der Vakuumkanäle 12 und 13 (siehe Fig.5) können diese auch mit dem gleichen Durchmesser ausgeführt werden. Mittels oberer und unterer O-Ringe 16 und 17 kann das Halten der Substrate an deren Randbereich unterstützt werden. Durch getrennte Ausbildung und Ansteuerung der Vakuumkanäle in dem oberen Substrathalter 10 und dem unteren Substrathalter 9 können oben und unten unterschiedliche Abblasdrücke P1 und P2 eingestellt werden, so dass auch ein unterschiedliches Dishing eingestellt werden kann, um vorhandenen Dishing-Effekten gegenzusteuern oder auszugleichen.

Fig.3 zeigt die Vakuumkammer 1 in geöffnetem Zustand, mit in das Bodenteil 2 und das Deckelteil 4 eingelegten Substraten A und B (Ziffern 3 und 5), sowie mit den Zentrierpins 7 und 8. Ferner sind in dem Bodenteil und dem Deckelteil die Vakuumkanäle 11,12 und 13 für das Haltevakuum und das Abblasen zu erkennen. Weiter ersichtlich ist, dass der untere Substrathalter 9 als Kolben ausgebildet ist, der mit einer oberen Dichtlippe 14 und einer unteren Dichtlippe 15 schwimmend, aber dichtend in dem Bodenteil 2 verschiebbar gelagert ist. Im Bereich der oberen Dichtlippe können zusätzlich Führungsmittel 25 vorgesehen werden. Ansonsten ist der Kolben 9 von der Innenwand des Bodenteils beabstandet. Auf diese Weise kann sich der schwimmende Kolben 9 optimal dem feststehenden Deckel anpassen. Bei geschlossener und mit einem Dichtring 18 abgedichteter Vakuumkammer wird somit ein Zweikammemsystem gebildet, wobei oberhalb des Kolbens 9 eine Unterdruckkammer 20 mit einem Fügevakuum und unterhalb des Kolbens 9 eine Überdruckkammer 19 gebildet wird, die mit einer nicht dargestellten Druckluftquelle 21 in Verbindung steht. Durch das Fügevakuum in der Unterdruckkammer 20 wird der untere Substrathalter 9 angesaugt und gegen den oberen Substrathalter 10 gesaugt. In den Verfahrensschritten gemäß Fig.1h bis k wird Druckluft in die Überdruckkammer 19 eingeleitet und der untere Substrathalter 9 mittels dieser Druckluft nach oben bewegt. Da der Kolben 9 nur im oberen Bereich geführt ist und ansonsten nur über die Dichtlippen 14 und 15 mit der Innenwand in Verbindung steht, kann keine mechanische Verspannung beim Pressvorgang auftreten. Wenn der untere Substrathalter bzw. Kolben 9 auf Anschlag steht, kann über die Überdruckkammer 19 der kolben 9 mit dem erforderlichen Anpressdruck beaufschlagt werden, um den Fügeprozeß mit einem Preßschritt abzuschließen.

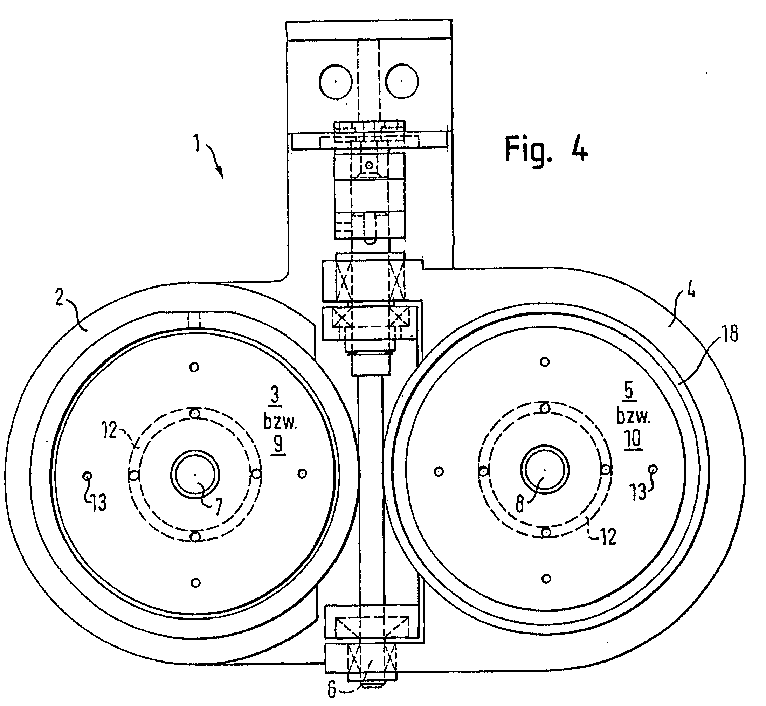

Fig.4 zeigt eine Draufsicht auf die Vakuumkammer 1 in geöffnetem Zustand. Gleiche Bezugszeichen beschreiben gleiche Bauteile.

Da der Klebstoff vom Typ Holt-Melt lösungsmittelfrei ist und bei hoher Temperatur schmilzt und klebrig ist, können die Substrathalter 9 und/oder 10 sowie das Deckelteil und/oder das Bodenteil der Vakuumkammer beheizt werden, um die offene Zeit zwischen dem Fügen und dem Abkühlen zu verkürzen.

In der in Figur 5 gezeigten zweiten Ausführungsform der erfindungsgemäßen Fügestation ist die untere Kammer 19 sowohl an eine Druckluftquelle 21 als auch an eine Vakuumpumpe 24 angeschlossen und kann wahlweise und wechselweise mit Druckluft gefüllt oder evakuiert werden. Um die Luft zwischen den Substraten vor dem Fügen weitgehend zu reduzieren, ist ein hohes Vakuum im Fügeraum 20 zwischen den Substraten unerläßlich. Ein hohes Fügevakuum reduziert die Lufteinschlüsse zwischen den Klebeflächen der Substrate. Dies verbessert die verklebte Fläche sowie die Haftfestigkeit, was zu einer besseren Stabilität und Ebenheit der gebondeten Disc führt. Um ein hohes Fügevakuum zu erzielen von etwa 50mbar oder auch darunter, wird die untere Kammer 19 zunächst ebenfalls an eine Vakuumpumpe 24 angeschlossen und gleichfalls evakuiert. Es wird also zu beiden Seiten des Kolbens 9 ein gleichgroßes Vakuum eingestellt. Die Unterdruckkammer 20 (= Fügevakuumkammer) und die untere Kammer 19 besitzen den gleichen Durchmesser. Es herrscht somit ein Kräftegleichgewicht und der Kolben 9 verharrt zunächst in seiner Ursprungslage. Liegt auf beiden Seiten des Kolbens 9 das gewünschte Vakuum an, wird in der unteren Kammer 19 das Vakuum bis auf den Umgebungsdruck reduziert, sodaß sich der Kolben 9 aufgrund der Druckdifferenz nach oben bewegen kann. Anschließend wird umgeschaltet auf die Druckluftquelle 21 und wie im Beispiel gemäß Figur 3 die Substrate verpresst. Durch die Geschwindigkeit, wie schnell das Vakuum reduziert wird, kann die Fügegeschwindigkeit, also wie schnell der Kolben 9 nach oben fährt, verfahrensoptimiert eingestellt werden. Je nach Fügegeschwindigkeit kann der Fügeprozess somit eher hart oder eher weich eingestellt werden, was bei spröden oder empfindlichen Schichten wie DVD 18, DVD-R und DVD-RW von Bedeutung ist. Im übrigen ist der Aufbau und die Funktionsweise wie in dem Ausführungsbeispiel gemäß Figur 3. Gleiche Bezugszeichen beschreiben gleiche Bauteile.

Um die beiden Substrate von innen nach aussen fügen zu können, wird das obere Substrat 5 mittels des oberen Zentrierpins 8 zunächst leicht durchgebogen, wozu dieser mit einem geeigneten Absatz ausgebildet ist. Anschließend wird zunächst das Vakuum an den inneren Vakuumkanälen 12 abgeschaltet Nachfolgend wird das Vakuum an den äusseren Vakuumkanälen 13 abgeschaltet. Gegebenenfalls können im mittleren Bereich der Substrate zusätzliche Vakuumkanäle 26 vorgesehen werden, die vorzugsweise mit dem inneren Vakuumanschluss verbunden werden können. Eine weiche Auflage für die Substrate, zum Beispiel PAI, erleichtert das Fügen von innen nach aussen. Nach dem Abschalten des inneren Vakuums kann bedarfsweise auf Abblasen umgeschaltet werden.

Um die Positionierung und Ausrichtung der Substrate A und B zueinander zu verbessern, kann vorgesehen werden, daß das Deckelteil 4 nach dem Schließen mit dem Bodenteil 2 mechanisch verriegelt wird.

### Bezugszeichenliste

- 1: Vakuumkammer
- 2: Bodenteil der Vakuumkammer
- 3: A-Substrat
- 4: Deckelteil der Vakuumkammer
- 5: B-Substrat
- 6: Drehachse
- 7: A-Zentrierpin
- 8: B-Zentrierpin
- 9: Substrathalter für A-Substrat (Kolben)
- 10: Substrathalter für B-Substrat
- 11: Hauptkanal für Haltevakuum und Abblasen
- 12: Erster Kanal für Haltevakuum und Abblasen
- 13: Zweiter Kanal für Haltevakuum und Abblasen
- 14: Obere Dichtlippe
- 15: Untere Dichtlippe
- 16: Oberer O-Ring
- 17: Unterer O-Ring
- 18: Dichtring
- 19: Untere Kammer (Überdruckkammer und gegebenenfalls zusätzlich Unterdruckkammer)
- 20: Unterdruckkammer
- 21: Druckluftquelle
- 22: Vakuumpumpe für Haltevakuum
- 23: Vakuumpumpe für Haltevakuum
- 24: Vakuumpumpe für untere Kammer 19
- 25: Führungsmittel
- 26: Mittlere Vakuumkanäle
- 27: Oberer Vakuumanschluss aussen
- 28: Oberer Vakuumanschluss innen
- 29: Unterer Vakuumanschluss aussen
- 30: Unterer Vakuumanschluss innen

## Patentansprüche

1. Vorrichtung zum Vakuumpressen von scheibenförmigen Substraten, insbesondere von DVD-Substraten, mit einer Vakuumkammer (1), mit einem ersten Substrathalter (9) für die A-Scheibe (A-Substrathalter) sowie einem zweiten Substrathalter (10) für die B-Scheibe (B-Substrathalter), die in der Vakuumkammer (1) untergebracht sind, sowie mit Mitteln zum Erzeugen von Druck auf wenigstens einen der Substrathalter
**dadurch gekennzeichnet,**
**dass** ein in der Vakuumkammer (1) verschiebbares und an seinem Umfang mit Dichtmitteln (14, 15) ausgestattetes Zwischenelement (9) vorgesehen ist, das die Vakuumkammer in eine erste (20) an eine Vakuumpumpe (23) angeschlossene Kammer (Unterdruckkammer) und eine zweite (19) an eine Druckluftquelle (21) angeschlossene Kammer (Überdruckkammer) aufteilt, dass das Zwischenelement (9) auf der Seite der Unterdruckkammer als erster Substrathalter (A-Substrathalter) ausgebildet ist, und dass der zweite Substrathalter (B-Substrathalter) (10) auf der dem A-Substrathalter gegenüberliegenden Seite der Unterdruckkammer (20) vorgesehen ist.

2. Vorrichtung nach Anspruch 1, **dadurch gekennzeichnet,**
**dass** das Zwischenelement (9) als Kolben ausgebildet ist und dass als Dichtmittel (14, 15) zwei oder mehr voneinander beabstandete Dichtringe um den Kolben vorgesehen sind, die in entsprechende Ringnuten eingelassen sind.

3. Vorrichtung nach Anspruch 1, **dadurch gekennzeichnet,**
**dass** das Zmdschenelement (9) mehrteilig ausgebildet ist, wobei wenigstens zwei Teile mit Dichtmitteln ausgestattet sind, wobei zwischen den Teilen Stangen o.dgl. vorgesehen sind und wobei das die Unterdruckkammer begrenzende Teil als Substrathalter ausgebildet ist.

4. Vorrichtung nach einem der Ansprüche 1 bis 3, **dadurch gekennzeichnet,**
**dass** das Zwischenelement an seinem Umfang mit Gleit- und/oder Rollenlagem zum Verschieben in der Vakuumkammer versehen ist.

5. Vorrichtung nach einem der Ansprüche 1 bis 4, **dadurch gekennzeichnet,**
**dass** als Dichtmittel (14, 15) ein oder mehrere Dichtlippen vorgesehen sind.

6. Vorrichtung nach einem der Ansprüche 1 bis 5, **dadurch gekennzeichnet,**
**dass** das der Unterdruckkammer (20) zugeordnete Deckelteil mit einem Scharnier auf- und zuklappbar an dem übrigen Körper der Vakuumkammer befestigt ist.

7. Vorrichtung nach einem der Ansprüche 1 bis 6, **dadurch gekennzeichnet,**
**dass** in dem Deckelteil ein axial verschiebbarer Zentrierpin (8) vörgesehen ist, auf dem das B-Substrat zentriert gehalten wird, und dass der Zentrierpin durch das B-Substrat hindurch in das Mittelloch des auf dem A-Substrathalter aufliegenden A-Substrats eintauchbar ist.

8. Vorrichtung nach einem der Ansprüche 1 bis 7, **dadurch gekennzeichnet,**
**dass** ein oder beide Substrathalter als Vakuumteller ausgebildet sind.

9. Vorrichtung nach einem der Ansprüche 1 bis 8, **dadurch gekennzeichnet,**
**dass** in den Substrathaltern Vakuumkanäle (12, 13) zum Vakuumansaugen der Substrate vorgesehen sind.

10. Vorrichtung nach Anspruch 9, **dadurch gekennzeichnet,**
**dass** die Vakuumkanäle (12, 13) von oberem Substrathalter und unterem Substrathalter getrennt voneinander betrieben werden können.

11. Vorrichtung nach Anspruch 9 oder 10, **dadurch gekennzeichnet,**
**dass** im Bereich des Mittellochs Vakuumkanäle vorgesehen sind, die einen größeren Querschnitt aufweisen als Vakuumkanäle im Randbereich der Substrathalter.

12. Vorrichtung nach einem der Anprüche 9 bis 11, **dadurch gekennzeichnet,**
**dass** an den Substrathaltem um die Substrate herum O-Ringe vorgesehen sind.

13. Vorrichtung nach einem der Ansprüche 9 bis 12, **dadurch gekennzeichnet,**
**dass** über die Vakuumkanäle Druckluft eingeblasen werden kann, wenn das Vakuum abgeschaltet ist.

14. Vorrichtung nach einem der Ansprüche 9 bis 13, **dadurch gekennzeichnet,**
**dass** das Abschalten des Vakuums und das Einblasen von Luft derart erfolgt, dass die Substrate von der Mitte nach außen abgeblasen werden.

15. Vorrichtung nach einem der Ansprüche 9 bis 14, **dadurch gekennzeichnet,**
**daß** die inneren und die äusseren Vakuumkanäle zum Vakuumsaugen der Substrate voneinander getrennt betreibbar sind.

16. Vorrichtung zum Vakuumpressen von scheibenförmigen Substraten, insbesondere von DVD-Substraten, mit einer Vakuumkammer (1), mit einem ersten Substrathalter (9) für die A-Scheibe (A-Substrathalter) sowie einem zweiten Substrathalter (10) für die B-Scheibe (B-Substrathalter), die in der Vakuumkammer (1) untergebracht sind, sowie mit Mitteln zum Erzeugen von Druck auf wenigstens einen der Substrathalter
**dadurch gekennzeichnet,**
**dass** ein in der Vakuumkammer (1) verschiebbares und an seinem Umfang mit Dichtmitteln ausgestattetes Zwischenelement (9) vorgesehen ist, das die Vakuumkammer in eine erste (20) an eine Vakuumpumpe angeschlossene Kammer (Unterdruckkammer) und in eine zweite Kammer (19) aufteilt, die wechselweise mit einer Vakuumpumpe (24) und einer Druckluftquelle (21) verbindbar ist, dass das Zwischenelement (5) auf der Seite der ersten Kammer (Unterdruckkammer) als erster Substrathalter (A-Substrathalter) ausgebildet ist, und dass der zweite Substrathalter (B-Substrathalter (10)) auf der dem A-Substrathalter gegenüberliegenden Seite der ersten Kammer (Unterdruckkammer (20)) vorgesehen ist.

17. Vorrichtung nach Anspruch 16, **dadurch gekennzeichnet,**
**daß** in dem Boden der Vakuumkammer zwei separate Anschlüsse vorgesehen sind, von denen einer mit einer Druckluftquelle (21) und der andere mit einer Vakuumpumpe (24) verbunden ist.

18. Vorrichtung nach Anspruch 16, **dadurch gekennzeichnet,**
**daß** in dem Boden der Vakuumkammer ein Anschluss vorgesehen ist, von dem eine Verbindungsleitung ausgeht, die über ein Umschaltventil wechselweise an eine Druckluftquelle (21) und an eine Vakuumpumpe (23) anschließbar ist.

19. Vorrichtung nach einem der Ansprüche 16 bis 18, **dadurch gekennzeichnet,**
**dass** das Zwischenelement (9) als Kolben ausgebildet ist und dass als Dichtmittel zwei oder mehr voneinander beabstandete Dichtringe (14, 15) um den Kolben vorgesehen sind, die in entsprechende Ringnuten eingelassen sind.

20. Vorrichtung nach einem der Ansprüche 16 bis 18, **dadurch gekennzeichnet,**
**dass** das Zwischenelement (9) mehrteilig ausgebildet ist, wobei wenigstens zwei Teile mit Dichtmitteln ausgestattet sind, wobei zwischen den Teilen Stangen o.dgl. vorgesehen sind und wobei das die Unterdruckkammer begrenzende Teil als Substrathalter ausgebildet ist.

21. Vorrichtung nach einem der Ansprüche 16 bis 20, **dadurch gekennzeichnet,**
**dass** das Zwischenelement an seinem Umfang mit Gleit- und/oder Rollenlagern zum Verschieben in der Vakuumkammer versehen ist.

22. Vorrichtung nach einem der Ansprüche 16 bis 21, **dadurch gekennzeichnet,**
**dass** als Dichtmittel ein oder mehrere Dichtlippen vorgesehen sind.

23. Vorrichtung nach einem der Ansprüche 16 bis 22, **dadurch gekennzeichnet,**
**dass** das der Unterdruckkammer zugeordnete Deckelteil mit einem Scharnier auf- und zuklappbar an dem übrigen Körper der Vakuumkammer befestigt ist.

24. Vorrichtung nach einem der Ansprüche 16 bis 23, **dadurch gekennzeichnet,**
**dass** in dem Deckelteil ein axial verschiebbarer Zentrierpin (8) vorgesehen ist, auf dem das B-Substrat zentriert gehalten wird, und dass der Zentrierpin durch das B-Substrat hindurch in das Mittelloch des auf dem A-Substrathalter aufliegenden A-Substrats eintauchbar ist.

25. Vorrichtung nach einem der Ansprüche 16 bis 24, **dadurch gekennzeichnet,**
**dass** ein oder beide Substrathalter als Vakuumteller ausgebildet sind.

26. Vorrichtung nach einem der Ansprüche 16 bis 25, **dadurch gekennzeichnet,**
**dass** in den Substrathaltem Vakuumkanäle (12, 13) zum Vakuumansaugen der Substrate vorgesehen sind.

27. Vorrichtung nach Anspruch 26, **dadurch gekennzeichnet,**
**dass** die Vakuumkanäle (12, 13) von oberem Substrathalter und unterem Substrathalter getrennt voneinander betrieben werden können.

28. Vorrichtung nach Anspruch 26 oder 27, **dadurch gekennzeichnet,**
**dass** im Bereich des Mittellochs Vakuumkanäle vorgesehen sind, die einen größeren Querschnitt aufweisen als Vakuumkanäle im Randbereich der Substrathalter.

29. Vorrichtung nach einem der Anprüche 26 bis 28, **dadurch gekennzeichnet,**
**dass** an den Substrathaltem um die Substrate herum O-Ringe vorgesehen sind.

30. Vorrichtung nach einem der Ansprüche 26 bis 29, **dadurch gekennzeichnet,**
**dass** über die Vakuumkanäle Druckluft eingeblasen werden kann, wenn das Vakuum abgeschaltet ist.

31. Vorrichtung nach einem der Ansprüche 26 bis 30, **dadurch gekennzeichnet,**
**dass** das Abschalten des Vakuums und das Einblasen von Luft derart erfolgt, dass die Substrate von der Mitte nach außen abgeblasen werden.

32. Vorrichtung nach einem der Ansprüche 26 bis 31, **dadurch gekennzeichnet,**
**daß** die inneren und die äusseren Vakuumkanäle zum Vakuumsaugen der Substrate voneinander getrennt betreibbar sind.

## Claims

1. Device for the vacuum pressing of disc-shaped substrates, in particular DVD substrates, with a vacuum chamber (1) , with a first substrate holder (9) for the A-disc (A-substrate holder) and a second substrate holder (10) for the B-disc (B-substrate holder) which are housed in the vacuum chamber (1), as well as means for generating pressure on at least one of the substrate holders, **characterised in that** an intermediate element (9) which is displaceable in the vacuum chamber (1) and equipped at its periphery with sealing means (14, 15) and which divides the vacuum chamber into a first chamber (20) (vacuum chamber) connected to a vacuum pump (23) and a second chamber (19) (excess pressure chamber) connected to a compressed air source (21), **in that** the intermediate element (9) is formed as a first substrate holder (A-substrate holder) on the side of the vacuum chamber, and **in that** the second substrate holder (B-substrate holder) (10) is provided on the side of the vacuum chamber (20) opposing the A-substrate holder.

2. Device according to claim 1, **characterised in that** the intermediate element (9) is formed as a piston and **in that** two or more sealing rings which are spaced apart from one another and inserted into corresponding annular grooves are provided as sealing means (14, 15) around the piston.

3. Device according to claim 1, **characterised in that** the intermediate element (9) is formed so as to be multi-part, wherein at least two parts are equipped with sealing means, rods or the like being provided between the parts and the part delimiting the vacuum chamber being formed as a substrate holder.

4. Device according to any one of claims 1 to 3, **characterised in that** the intermediate element is provided at its periphery with sliding and/or roller bearings for displacement in the vacuum chamber.

5. Device according to any one of claims 1 to 4, **characterised in that** one or more sealing lips are provided as sealing means (14, 15).

6. Device according to any one of claims 1 to 5, **characterised in that** the cover part associated with the vacuum chamber (20) is fastened by a hinge so as to be openable and closeable on the remaining body of the vacuum chamber.

7. Device according to any one of claims 1 to 6, **characterised in that** provided in the cover part is an axially displaceable centring pin (8) on which the B-substrate is held in a centred manner, and **in that** the centring pin can be inserted through the B-substrate into the central hole of the A-substrate resting on the A-substrate holder.

8. Device according to any one of claims 1 to 7, **characterised in that** one or both substrate holders are formed as vacuum plates.

9. Device according to any one of claims 1 to 8, **characterised in that** vacuum channels (12, 13) are provided in the substrate holders for vacuum suction of the substrates.

10. Device according to claim 9, **characterised in that** the vacuum channels (12, 13) of the upper substrate holder and lower substrate holder can be operated separately from one another.

11. Device according to claim 9 or 10, **characterised in that** vacuum channels are provided in the region of the central hole which have a larger cross-section than vacuum channels in the edge region of the substrate holders.

12. Device according to any one of claims 9 to 11, **characterised in that** O-rings are provided on the substrate holders around the substrates.

13. Device according to any one of claims 9 to 12, **characterised in that** compressed air can be injected via the vacuum channels when the vacuum is switched off.

14. Device according to any one of claims 9 to 13, **characterised in that** the switching off of the vacuum and the injection of air takes place in such a way that the substrates are blown off from the centre outwards.

15. Device according to any one of claims 9 to 14, **characterised in that** the inner and outer vacuum channels can be operated separately from one another for vacuum suction of the substrates.

16. Device for the vacuum pressing of disc-shaped substrates, in particular DVD substrates, with a vacuum chamber (1), with a first substrate holder (9) for the A-disc (A-substrate holder) and a second substrate holder (10) for the B-disc (B-substrate holder) which are housed in the vacuum chamber (1), as well as means for generating pressure on at least one of the substrate holders, **characterised in that** an intermediate element (9) which is displaceable in the vacuum chamber (1) and equipped at its periphery with sealing means and which divides the vacuum chamber into a first chamber (20) (vacuum chamber) connected to a vacuum pump and a second chamber (19) which can be alternately connected to vacuum pump (24) and a compressed air source (21), **in that** the intermediate element (9) is formed as a first substrate holder (A-substrate holder) on the side of the first chamber (vacuum chamber), and **in that** the second substrate holder (B-substrate holder) (10) is provided on the side of the first chamber (vacuum chamber) (20) opposing the A-substrate holder.

17. Device according to claim 16, **characterised in that** provided in the base of the vacuum chamber are two separate connections, of which one is connected to a compressed air source (21) and the other is connected to a vacuum pump (24).

18. Device according to claim 16, **characterised in that** provided in the base of the vacuum chamber is a connection, from which a connection line issues which can be connected via a reversing valve alternately to a compressed air source (21) and to a vacuum pump (23).

19. Device according to any one of claims 16 to 18, **characterised in that** the intermediate element (9) is formed as a piston and **in that** two or more sealing rings (14, 15) which are spaced from one another and inserted into corresponding annular grooves are provided around the piston.

20. Device according to any one of claims 16 to 18, **characterised in that** the intermediate element (9) is formed so as to be multi-part, wherein at least two parts are equipped with sealing means, rods or the like being provided between the parts and the part delimiting the vacuum chamber being formed as a substrate holder.

21. Device according to any one of claims 16 to 20, **characterised in that** the intermediate element is provided at its periphery with sliding and/or roller bearings for displacement in the vacuum chamber.

22. Device according to any one of claims 16 to 21, **characterised in that** one or more sealing lips are provided as sealing means.

23. Device according to any one of claims 16 to 22, **characterised in that** the cover part associated with the vacuum chamber is fastened by a hinge so as to be openable and closeable on the remaining body of the vacuum chamber.

24. Device according to any one of claims 16 to 23, **characterised in that** provided in the cover part is an axially displaceable centring pin (8) on which the B-substrate is held in a centred manner, and **in that** the centring pin can be inserted through the B-substrate into the central hole of the A-substrate resting on the A-substrate holder.

25. Device according to any one of claims 16 to 24, **characterised in that** one or both substrate holders are formed as vacuum plates.

26. Device according to any one of claims 16 to 25, **characterised in that** vacuum channels (12, 13) are provided in the substrate holders for vacuum suction of the substrates.

27. Device according to claim 26, **characterised in that** the vacuum channels (12, 13) of the upper substrate holder and lower substrate holder can be operated separately from one another.

28. Device according to claim 26 or 27, **characterised in that** vacuum channels are provided in the region of the central hole which have a larger cross-section than vacuum channels in the edge region of the substrate holders.

29. Device according to any one of claims 26 to 28, **characterised in that** O-rings are provided on the substrate holders around the substrates.

30. Device according to any one of claims 26 to 29, **characterised in that** compressed air can be injected via the vacuum channels when the vacuum is switched off.

31. Device according to any one of claims 26 to 30, **characterised in that** the switching off of the vacuum and the injection of air takes place in such a way that the substrate are blown off from the centre outwards.

32. Device according to any one of claims 26 to 31, **characterised in that** the inner and outer vacuum channels can be operated separately from one another for vacuum suction of the substrates.

## Revendications

1. Dispositif pour comprimer sous vide des substrats en forme de disque, en particulier des substrats de DVD, avec une chambre à vide (1) avec un premier support de substrat (9) pour le disque A (support de substrat A) ainsi qu'un second support de substrat (10) pour le disque B (support de substrat B), qui sont logés dans la chambre à vide (1), de même qu'avec des moyens de génération de pression sur au moins un des supports de substrat, **caractérisé en ce qu'**il est prévu un élément intermédiaire (9) pouvant être déplacé dans la chambre à vide (1) et équipé de moyens d'étanchéité (14, 15) à sa périphérie, lequel sépare la chambre à vide en une première chambre (20) (chambre de dépression) reliée à une pompe à vide (23) et en une seconde chambre (19) (chambre de surpression) reliée à une source d'air comprimé (21), **en ce que** l'élément intermédiaire (9) est formé sur le côté de la chambre de dépression comme premier support de substrat (support de substrat A), et **en ce que** le second support de substrat (10) (support de substrat B) est prévu sur le côté opposé au support de substrat A de la chambre de dépression (20).

2. Dispositif selon la revendication 1, **caractérisé en ce que** l'élément intermédiaire (9) est conçu comme un piston, et **en ce que** deux ou plusieurs rondelles d'étanchéité distantes les unes des autres sont prévues autour du piston comme moyen d'étanchéité (14, 15), lesquelles sont encastrées dans des rainures annulaires correspondantes.

3. Dispositif selon la revendication 1, **caractérisé en ce que** l'élément intermédiaire (9) est conçu en plusieurs parties, sachant qu'au moins deux parties sont équipées de moyens d'étanchéité, des tiges ou autres étant prévues entre les parties et la partie délimitant la chambre de dépression étant conçue comme un support de substrat.

4. Dispositif selon l'une des revendications 1 à 3, **caractérisé en ce que** l'élément intermédiaire est muni à sa périphérie de paliers antifriction et/ou paliers à rouleaux pour le déplacement dans la chambre à vide.

5. Dispositif selon l'une quelconque des revendications 1 à 4, **caractérisé en ce qu'**une ou plusieurs lèvres d'étanchéité sont prévues comme moyen d'étanchéité (14, 15).

6. Dispositif selon l'une quelconque des revendications 1 à 5, **caractérisé en ce que** la partie de couvercle associée à la chambre de dépression (20) est fixée par une charnière basculant en position ouverte et fermée sur le corps restant de la chambre à vide.

7. Dispositif selon l'une quelconque des revendications 1 à 6, **caractérisé en ce qu'**une broche de centrage (8) pouvant se déplacer axialement dans la partie de couvercle, sur laquelle le support de substrat B est maintenu en position centrée, est prévue dans la partie de couvercle, et **en ce que** la broche de centrage peut être plongée au travers du substrat B dans l'orifice central du substrat A posé sur le support de substrat A.

8. Dispositif selon l'une quelconque des revendications 1 à 7, **caractérisé en ce qu'**un ou les deux supports de substrat sont conçus comme une cuvette sous vide.

9. Dispositif selon l'une quelconque des revendications 1 à 8, **caractérisé en ce que** des conduites sous vide (12, 13) sont prévues dans les supports de substrat pour aspiration à vide des substrats.

10. Dispositif selon la revendication 9, **caractérisé en ce que** les conduites sous vide (12, 13) du support de substrat supérieur et du support de substrat inférieur peuvent être actionnées séparément l'une de l'autre.

11. Dispositif selon la revendication 9 ou 10, **caractérisé en ce que** des conduites sous vide, qui comportent une section transversale supérieure à celle des conduites sous vide au bord des supports de substrat, sont prévues dans la zone de l'orifice central.

12. Dispositif selon l'une quelconque des revendications 9 à 11, **caractérisé en ce que** des joints toriques sont prévus sur les supports de substrat autour des substrats.

13. Dispositif selon l'une quelconque des revendications 9 à 12, **caractérisé en ce que** de l'air comprimé peut être insufflé par les conduites sous vide lorsque le vide est arrêté.

14. Dispositif selon l'une quelconque des revendications 9 à 13, **caractérisé en ce que** l'arrêt du vide et l'insufflation d'air s'effectue de telle sorte que les substrats soient insufflés du milieu vers l'extérieur.

15. Dispositif selon l'une quelconque des revendications 9 à 14, **caractérisé en ce que** les conduites sous vide internes et externes peuvent être actionnées séparément l'une de l'autre pour aspiration sous vide des substrats.

16. Dispositif pour comprimer sous vide des substrats en forme de disque, en particulier des substrats de DVD, avec une chambre à vide (1) avec un premier support de substrat (9) pour le disque A (support de substrat A) ainsi qu'un second support de substrat (10) pour le disque B (support de substrat B), qui sont logés dans la chambre à vide (1), de même qu'avec des moyens de génération de pression sur au moins un des supports de substrat, **caractérisé en ce qu'**il est prévu un élément intermédiaire (9) pouvant être déplacé dans la chambre à vide (1) et équipé de moyens d'étanchéité à sa périphérie, lequel sépare la chambre à vide en une première chambre (20) reliée à une pompe à vide (chambre de dépression) et en une seconde chambre (19), qui peut être reliée alternativement à une pompe à vide (23) et à une source d'air comprimé (21), **en ce que** l'élément intermédiaire (9) est conçu sur le côté de la première chambre (chambre de dépression) comme premier support de substrat (support de substrat A), et **en ce que** le second support de substrat (10) (support de substrat B) est prévu sur le côté opposé au support de substrat A de la première chambre (chambre de dépression) (20).

17. Dispositif selon la revendication 16, **caractérisé en ce que** deux raccordements séparés sont prévus au fond de la chambre à vide, parmi lesquels l'un est relié à une source d'air comprimé (21) et l'autre à une pompe à vide (24).

18. Dispositif selon la revendication 16, **caractérisé en ce qu'**un raccordement est prévu au fond de la chambre à vide, duquel ressort une canalisation de jonction, qui peut être raccordée alternativement par une soupape d'inversion à une source d'air comprimé (21) et à une pompe à vide (24).

19. Dispositif selon l'une quelconque des revendications 16 à 18, **caractérisé en ce que** l'élément intermédiaire (9) est conçu comme un piston et **en ce que** deux ou plusieurs rondelles d'étanchéité (14, 15) espacées les unes des autres sont prévues autour des pistons comme moyen d'étanchéité, lesquelles sont encastrées dans des rainures annulaires correspondantes.

20. Dispositif selon l'une quelconque des revendications 16 à 18, **caractérisé en ce que** l'élément intermédiaire (9) est conçu en plusieurs parties, sachant qu'au moins deux parties sont équipées de moyens d'étanchéité, des tiges ou autres étant prévues entre les parties et la partie délimitant la chambre de dépression étant conçue comme un support de substrat.

21. Dispositif selon l'une quelconque des revendications 16 à 20, **caractérisé en ce que** l'élément intermédiaire est doté à sa périphérie de paliers antifriction et/ou paliers à rouleaux pour le déplacement dans la chambre à vide.

22. Dispositif selon l'une quelconque des revendications 16 à 21, **caractérisé en ce qu'**une ou plusieurs lèvres d'étanchéité sont prévues comme moyen d'étanchéité.

23. Dispositif selon l'une quelconque des revendications 16 à 22, **caractérisé en ce que** la partie de couvercle associée à la chambre de dépression est fixée par une charnière basculant en position ouverte et fermée sur le corps restant de la chambre à vide.

24. Dispositif selon l'une quelconque des revendications 16 à 23, **caractérisé en ce qu'**une broche de centrage (8) pouvant se déplacer axialement est prévue dans la partie du couvercle, sur laquelle le support de substrat B est maintenu en position centrée, et **en ce que** la broche de centrage peut être plongée au travers du substrat B dans l'orifice central du substrat A posé sur le support de substrat A.

25. Dispositif selon l'une quelconque des revendications 16 à 24, **caractérisé en ce qu'**un ou les deux supports de substrat sont conçus comme une cuvette sous vide.

26. Dispositif selon l'une quelconque des revendications 16 à 25, **caractérisé en ce que** des conduites sous vide (12, 13) sont prévues dans les supports de substrat pour l'aspiration sous vide des substrats.

27. Dispositif selon la revendication 26, **caractérisé en ce que** les conduites sous vide (12, 13) du support de substrat supérieur et du support de substrat inférieur peuvent être actionnées séparément l'une de l'autre.

28. Dispositif selon la revendication 26 ou 27, **caractérisé en ce que** des conduites sous vide, qui comportent une section transversale plus importante que celles des conduites sous vide au bord des supports de substrat, sont prévues dans la zone de l'orifice central.

29. Dispositif selon l'une quelconque des revendications 26 à 28, **caractérisé en ce que** des joints toriques sont prévus sur les supports de substrat autour des substrats.

30. Dispositif selon l'une quelconque des revendications 26 à 29, **caractérisé en ce que** de l'air comprimé peut être insufflé par les conduites sous vide lorsque le vide est arrêté.

31. Dispositif selon l'une quelconque des revendications 26 à 30, **caractérisé en ce que** l'arrêt du vide et l'insufflation d'air s'effectuent de telle sorte que les substrats soient aspirés du milieu vers l'extérieur.

32. Dispositif selon l'une quelconque des revendications 26 à 31, **caractérisé en ce que** les conduites sous vide internes et externes peuvent être actionnées séparément l'une de l'autre pour l'aspiration sous vide des substrats.
